# EUROPEAN PATENT SPECIFICATION

(11) **EP 1 185 421 B1**
(45) Date of publication and mention of the grant of the patent: **16.08.2006**
(21) Application number: 00920258.1
(22) Date of filing: 20.04.2000
(51) Int. Cl.: B41J 2/145, B41J 2/155

(54) **PAGE-WIDTH PRINTHEAD**
SEITLICH VERBREITETER DRUCKKOPF
TETE D'IMPRESSION DE LARGEUR DE PAGE

(30) Priority: 22.04.1999 AU PP993399
(43) Date of publication of application: 13.03.2002
(73) Proprietor: Silverbrook Research Pty. Limited, Balmain, NSW 2041 (AU)
(72) Inventor: SILVERBROOK, Kia, Balmain, New South Wales 2041 (AU)
(74) Representative: Ferreccio, Rinaldo
(86) International application number: PCT/AU2000/000340
(87) International publication number: WO 2000/064680

(56) References cited:
- EP-A- 0 034 060
- EP-A- 0 571 804
- EP-A- 0 914 950
- EP-A- 0 960 737
- JP-A- 4 278 357

## Description

### Field of the Invention

The present invention relates to a page-width printhead for an ink printer.

### Background of the Invention

Page width printheads for ink printers typically are formed from a plurality of individual printhead elements (sometimes referred to as "chips"), with each printhead element having a plurality of ink ejection nozzles formed therein.

Because a number of individual printhead elements are employed in any one printhead, achievement of a uniform print or print tone along the entire length of the printhead has so far been practically impossible. Non-uniformities or variations occur due to minor differences in the ink ejection nozzles in adjacent printhead elements and such variations may even occur when the elements originate from a single wafer due to inherent variations in process parameters that arise during the production of elements on a single wafer.

It is known that even slight variations in the print determining characteristics of adjacent elements in a page-width printheads will diminish the quality of the resultant print significantly, as the differences between adjacent areas of a print will be "amplified" in the visual perception of the print.

EP 034 060 describes an inkjet printer with overlapping printheads. The overlapping nozzles are aligned as closely as possible. However, the pixel position where printing from one printhead stops and the adjacent printhead starts (called the 'stitch point') is still noticeable to the eye. To address this, the '060 arrangement varies the position of the stitch point across the width of the overlap area. This diffuses the stitch line into a stitch area to give a smoother transition to the eye.

EP 0 571 804 relates to a wide format inkjet printer with 4 separate scanning type printheads. Each printhead prints a separate section of a line of print extending across the page. The printhead carriages have X adjusters and Y adjusters for displacement of the printheads relative to eachother, in the plane of the page. In one embodiment, the adjusters are used to align the printheads to within one eighth of the nozzle spacing. This is approximately 0.0005 inches for a 240 dpi printer. The reference contends that this degree of alignment is enough to remove any visual artifacts from the output print. In a second embodiment, pairs of printheads completely overlap so that sequential pixels in the line of print are printed by alternating printheads of the printhead pair. This effectively serves to double the horizontal resolution of the output print, however, there is a print speed cost associated with this embodiment.

JP 61,111,067A uses a scanning printhead. Each swathe of printing partially overlaps the previous swathe. A dither matrix is applied to the input data as each line of each swathe is printed. However, within the area of overlap between swathes, each line of the printed input data is subject to alternating dither matrices - that of the previous swathe and that of the subsequent swathe. Therefore the discontinuity between the printing characteristics of one swathe and the next is diffused by interleaving the dither matrices of the two swathes.

### Summary of the Invention

An implementation of the present invention provides a page-width printhead for an ink printer according to claim 1. The printhead comprises a series of individual printhead elements, each having an array of ink ejection nozzles formed therein. The series of printhead elements extends substantially across the width of the printhead, with respective end portions of adjacent elements being located side by side in overlapping relationship. A dithering unit is provided for controlling the ejection of ink from ink nozzles of the printhead elements and the dithering unit is arranged, in use, to provide an interpolation between the characteristics of a pair of printhead elements across the length of the overlapping end portions of the pair of printhead elements.

In one embodiment of the invention, the elements are positioned obliquely with respect to one another to form a row of lapped elements.

In another embodiment, the elements are arranged in at least two parallel rows, with the elements in each row being spaced apart from one another and with the end portions of each element in one row overlapping the end portions of adjacent elements in the adjacent row.

In accordance with a second aspect of the present invention there is provided a method of controlling the ejection of ink from a page-width printhead as above defined, the method comprising the step of effecting an interpolation between the characteristics of a pair of printhead elements across the length of the overlapping end portions of the pair of printhead elements.

### Description of the Drawings

Notwithstanding any other forms which may fall within the scope of the present invention, preferred forms of the invention will now be described, by way of example only, with reference to the accompanying drawings, in which:
Figs. 1a and b are schematic illustrations of arrangements for positioning a number of printhead elements in a single printhead row.
Fig. 2 illustrates a printhead embodying the present invention.
Fig. 3 illustrates a graph of dither probabilities for use with the printhead of Fig. 2.
Fig. 4 illustrates a second printhead embodying the present invention.
Fig. 5 illustrates a third printhead embodying the present invention.

### Description of Preferred Embodiments

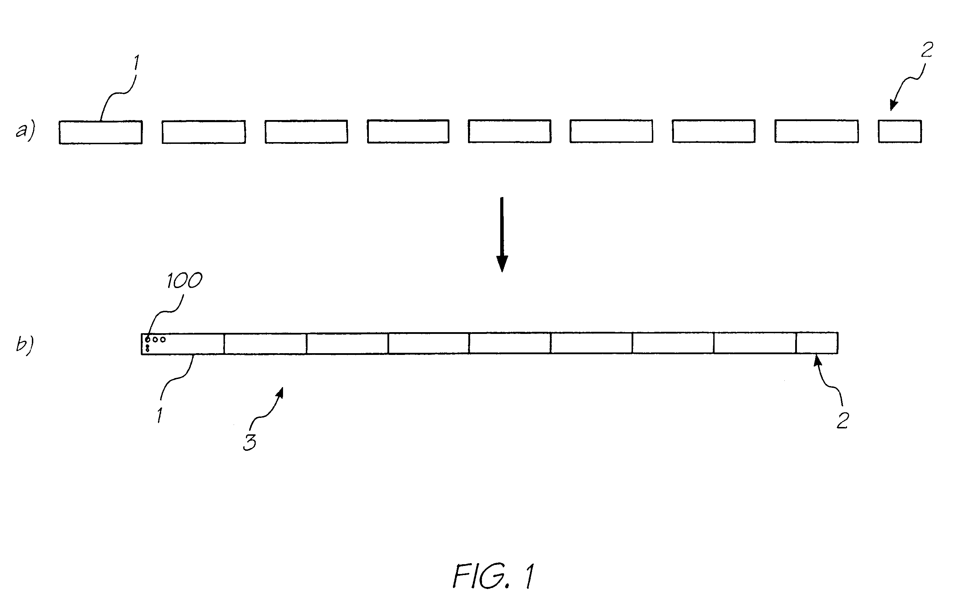

As shown in Fig. 1a, a CMOS processed wafer incorporating ink ejection nozzles 100 is initially diced into printhead elements 1 and tested for functionality of the ink-jet nozzles. The testing can take various forms from full ink ejection test to optical examination of device operation. Once a determination is made of the operational characteristics of each ink ejection nozzle, the elements are joined together into a longer inkjet printhead row 3 as illustrated in Fig. 1b. The printhead row 3 can include eight 1,27 cm elements 1 (half-inch) and one 0,635 cm element 2 (quarter inch) which are joined together. Each element 1 and 2 contains an array of a large number of the ink ejection nozzles 100.

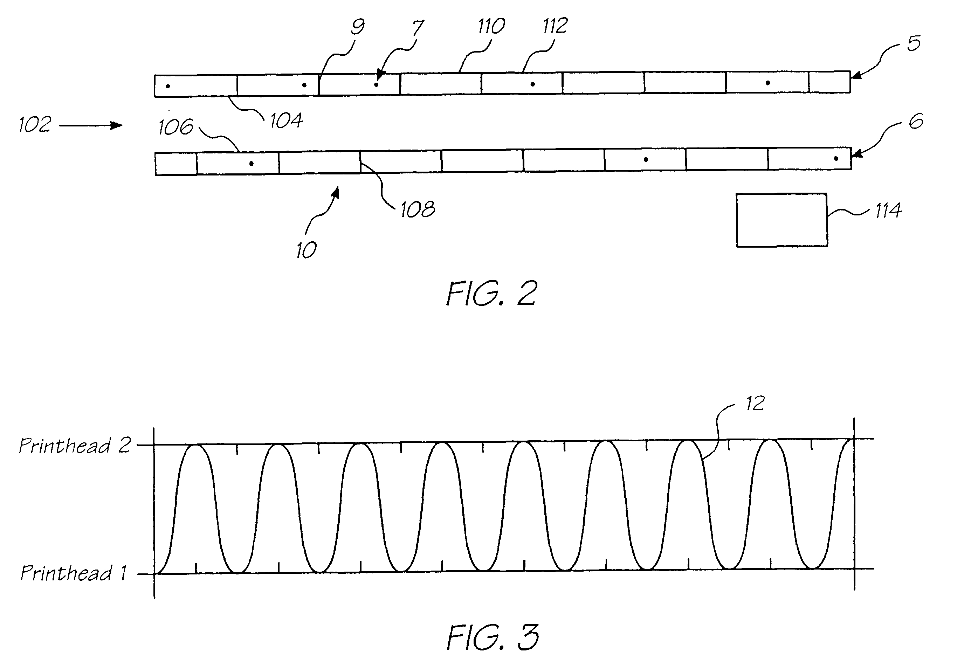

Next, as shown in Fig. 2, parallel printhead rows 5 and 6 are positioned side-by-side so as to form a printhead 102. The two printhead rows 5 and 6 are located with respect to each other such that respective end portions 104 and 106 of adjacent elements of the two rows 5 and 6 are located side by side in overlapping relationship.

Further, the element boundaries 9 of the printhead row 5 are positioned so as not to coincide with the element boundaries 108 of the printhead row 6.

In each of the printhead rows 5 and 6 it is likely that neighbouring elements 110 and 112 will have slightly different characteristics which, if each printhead row was utilised as an individual printhead, would result in unacceptable variations in printing across the width of a page. If the element 110 were to be taken from a first wafer and the element 112 taken from a second wafer, large variations across the element boundaries would be likely.

In the printhead 102 however, a dithering unit 114 is provided to control the ejection of ink from the nozzles 7 of the printhead 102. The dithering unit 114 is arranged to provide an overlap dithering matrix for the printhead rows 5 and 6.

Various dithering schemes may be adopted. One probability interpolation 12 for use in the provision of the overlap dithering matrix is as illustrated in Fig. 3.

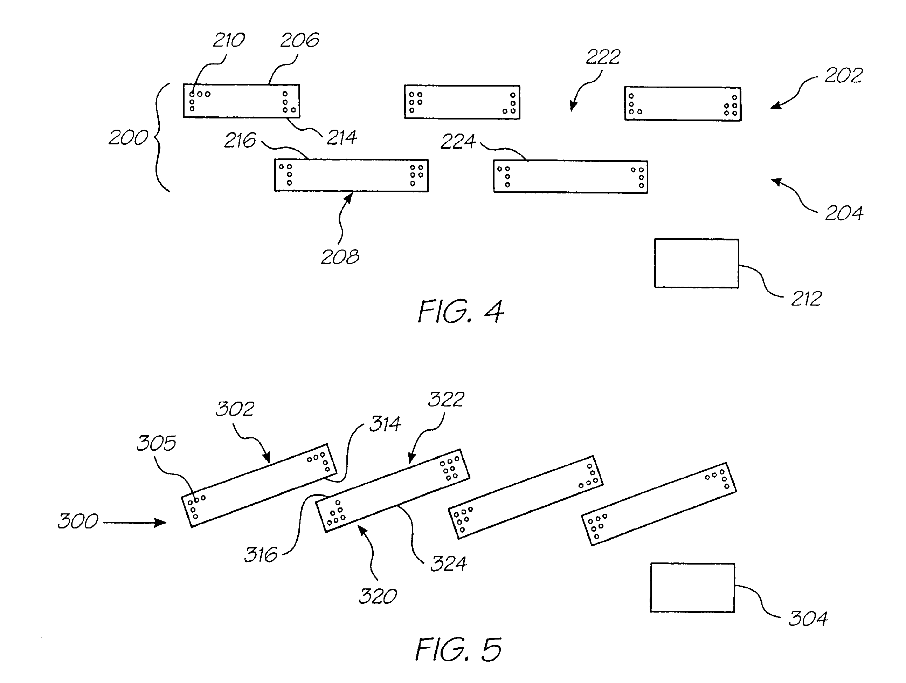

In an alternative embodiment illustrated in Fig. 4, a printhead 200 comprises two rows 202 and 204 of spaced apart printhead elements 206 and 208, the elements each being provided with an array of ink ejection nozzles 210. The printhead further comprises a dithering unit 212 which is arranged to provide integral dithering matrices for pairs of respective end portions 214 and 216 of adjacent elements 206 and 208 of the rows 202 and 204. In regions 222 of the printhead 200 between the overlapping end portions, the dithering unit 210 is arranged to provide dithering matrices for centre portions 224 of the individual elements.

Fig. 5 shows an alternative embodiment for a printhead 300 which comprises a row of individual printhead elements 302 positioned obliquely with respect to one another. The printhead 300 further comprises a dithering unit 304 for controlling the ejection of ink from ink ejection nozzles 305 of the elements 302 of the printhead 300. The dithering unit 304 in this embodiment is arranged to provide integral dithering matrices for pairs of respective end portions 314 and 316 of adjacent elements 302 and 320. In regions 322 of the printhead 300 between the overlapping end portions, the dithering unit 304 is arranged to provide dithering matrices for centre portions 324 of the individual elements.

## Claims

1. A page-width printhead (300) for an ink printer, the printhead comprising:
a series of individual printhead elements (302, 322), each having an array of ink ejection nozzles (305) formed therein, the series of printhead elements (302) extending substantially across the width of the printhead (300), with respective end portions (314, 316) of adjacent elements (302, 322) being located side by side in overlapping relationship; and,
a dithering unit (304) being provided for controlling the ejection of ink from the ink ejection nozzles (305) of the printhead elements (302, 322); **characterised in that**,
during use, the dithering unit (304) arranges the ink ejection nozzles (305) across the length of the overlapping end portions (314, 316) of a pair of printhead elements (302, 322) into a dither matrix, to provide an interpolation between the characteristics of the pair of printhead elements (302, 322).

2. A page-width printhead (300) as claimed in claim 1 wherein the ink ejection nozzles 305 between the overlapping ends (314, 316) of the printhead elements (302, 322) are arranged into separate dither matrices by the dither unit (304).

3. A page-width printhead (300) as claimed in claim 1 wherein the elements (302, 322) are positioned obliquely with respect to one another to form a row of lapped elements.

4. A page-width printhead (200) as claimed in claim 1 wherein the elements (206, 208) are arranged in at least two parallel rows (202, 204), with the elements in each row being spaced apart from one another and with the end portions (214) of each element (206) in one row (202) overlapping the end portions (216) of adjacent elements (208) in the adjacent row (204).

## Patentansprüche

1. Seitenbreiter Druckkopf (300) für einen Tintendrucker, wobei der Druckkopf umfasst:
eine Serie von individuellen Druckkopfelementen (302, 322), die jeweils eine Anordnung von darin ausgebildeten Tintenausstoßdüsen (305) aufweisen, wobei die Serie der Druckkopfelemente (302) sich im Wesentlichen über die Breite des Druckkopfes (300) erstreckt, wobei entsprechende Endbereiche (314, 316) benachbarter Elemente (302, 322) Seite an Seite in überlappender Beziehung angeordnet sind, und
eine Ditheringeinheit (304) zur Regelung des Tintenausstoßes aus den Tintenausstoßdüsen (305) der Druckkopfelemente (302, 322), **dadurch gekennzeichnet, dass** im Gebrauch die Ditheringeinheit (304) die Tintenausstoßdüsen (305) über die Länge der überlappenden Endbereiche (314, 316) eines Paares (302, 322) in eine Rastermatrize anordnet, um eine Interpolation zwischen den Eigenschaften des Paars der Druckkopfelemente (302, 322) bereit zu stellen.

2. Seitenbreiter Druckkopf (300) nach Anspruch 1, bei dem die Tintenausstoßdüsen (305) zwischen den überlappenden Enden (314, 316) der Druckkopfelemente (302, 322) durch die Ditheringeinheit (304) in unabhängige Rastermatrizen angeordnet werden.

3. Seitenbreiter Druckkopf (300) nach Anspruch 1, bei dem die Elemente (302, 322) mit Bezug zueinander schräg angeordnet sind, um eine Zeile von überlappenden Elementen auszubilden.

4. Seitenbreiter Druckkopf (200) nach Anspruch 1, bei dem die Elemente (206, 208) in mindestens zwei parallele Zeilen (202, 204) angeordnet sind, wobei die Elemente in jeder Zeile voneinander beabst andet sind und die Endbereiche (214) jedes Elements (206) in einer Zeile (202) die Endbereiche (216) benachbarter Elemente (208) in der benachbarten Zeile (204) überlappen.

## Revendications

1. Tête d'impression de largeur de page (300) pour une imprimante à encre, la tête d'impression comprenant :
une série d'éléments de tête d'impression individuels (302, 322) possédant chacun un ensemble de buses d'éjection d'encre (305) qui y sont formées, la série d'éléments de tête d'impression (302) s'étendant essentiellement sur la largeur de la tête d'impression (300), avec des parties d'extrémité respectives (314, 316) d'éléments adjacents (302, 322) situées côte à côte dans un rapport de superposition; et
une unité de tramage (304) étant prévue pour contrôler l'éjection d'encre des buses d'éjection d'encre (305) des éléments de tête d'impression (302, 322);
**caractérisée en ce que**
pendant l'utilisation, l'unité de tramage (304) agence les buses d'éjection d'encre (305) sur la longueur des parties d'extrémité en superposition (314, 316) d'une paire d'éléments de tête d'impression (302, 322) en une matrice de tramage, afin de fournir une interpolation entre les caractéristiques de la paire d'éléments de tête d'impression (302, 322).

2. Tête d'impression de largeur de page (300) telle que revendiquée dans la revendication 1, dans laquelle les buses d'éjection d'encre (305) entre les extrémités en superposition (314, 316) des éléments de tête d'impression (302, 322) sont agencées en matrices de tramage séparées grâce à l'unité de tramage(304).

3. Tête d'impression de largeur de page (300) telle que revendiquée dans la revendication 1, dans laquelle les éléments (302, 322) sont positionnés obliquement les uns par rapport aux autres afin de former une rangée d'éléments en recouvrement.

4. Tête d'impression de largeur de page (200) telle que revendiquée dans la revendication 1, dans laquelle les éléments (206, 208) sont disposés en au moins deux rangées parallèles (202, 204), avec les éléments dans chaque rangée espacés les uns par rapport aux autres et avec les parties d'extrémité (214) de chaque élément (206) dans une rangée (202) en superposition aux parties d'extrémité (216) d'éléments adjacents (208) dans la rangée adjacente (204).
